# EUROPÄISCHE PATENTSCHRIFT

(11) **EP 1 082 171 B1**
(45) Veröffentlichungstag und Bekanntmachung des Hinweises auf die Patenterteilung: **13.07.2011**
(21) Anmeldenummer: 99924993.1
(22) Anmeldetag: 17.05.1999
(51) Int. Cl.: B01J 19/00, B01J 4/00, C08F 2/42, B65D 90/44

(54) **SYSTEM FÜR DIE EINFÜHRUNG EINER FLÜSSIGKEIT IN EIN BEHÄLTER**
SUPPLY SYSTEM FOR TRANSFERRING A FLUID TO A CONTAINER
SYSTEME D'INTRODUCTION D'UN FLUIDE DANS UN RECIPIENT

(30) Priorität: 19.05.1998 DE 19822492
(43) Veröffentlichungstag der Anmeldung: 14.03.2001
(73) Patentinhaber: BASF SE, 67056 Ludwigshafen (DE)
(72) Erfinder: AICHINGER, Heinrich, D-68199 Mannheim (DE); FRIED, Michael, D-69121 Heidelberg (DE); NESTLER, Dr. Gerhard, A-1070 WIEN (AT); ODENWALD, Oliver, D-69226 Nussloch (DE)
(86) Internationale Anmeldenummer: PCT/EP1999/003387
(87) Internationale Veröffentlichungsnummer: WO 1999/059717

(56) Entgegenhaltungen:
- EP-A- 0 136 029
- DE-A- 19 749 859
- US-A- 4 622 209
- US-A- 4 640 323

## Beschreibung

Ein Versorgungssystem für die Zuführung eines Fluids zu einem Behälter wird insbesondere zur nachträglichen Stabilisierung von Stoffen verwendet, die üblicherweise in Behältern oder Lagertanks gelagert werden und die durch erhöhte Neigung zu unerwünschten chemischen Reaktionen, beispielsweise vorzeitige Polymerisation, oder sonstigen physikalischen Reaktionen, beispielsweise Kristallisation, ausgezeichnet sind.

Bekannt ist, daß bestimmte Stoffe oder Kombinationen von Stoffen in fester oder gelöster Form geeignet sind, die zu einem unerwünschten Zeitpunkt reagierenden polymerisierbaren Stoffe wieder zu stabilisieren. Diese Stoffe können in konventioneller Art und Weise in das Lagergut eingebracht und anschließend mit der für Tanklager-Einrichtung üblichen Pumpe, die zum Zweck des Ein- und Austankens vorgesehen ist, mit dem Tankinhalt vermischt werden. Nachteilig ist hierbei, daß Pumpen selbst Ausgangspunkt einer vorzeitigen Polymerisation sein können, die eine Verstopfung der Pumpe hervorruft. Daher kann im Bedarfsfall die Mischaufgabe nicht mehr erfüllt werden. Nachteilig ist weiterhin die Abhängigkeit von einer äußeren Energiequelle zum Antrieb der Pumpe, die notfallbedingt oder zufällig nicht verfägbar sein kann, so daß kein Eintrag von Stabilistionsflüssigkeit erfolgen kann

Um unabhängig von äußeren Energiequellen zu sein, wird daher auch ein Mischverfahren durch Einblasen von Gasen verwendet. Nachteilig ist, daß hierzu zusätzliche Einbauten im oder am Tank selbst vorgenommen werden müssen. In der Regel müssen solche Einbauten fest am Tank verankert werden, um während des normalen Betriebs nicht beschädigt oder abgerissen zu werden. Einbauten zum Eindrücken von Gasen befinden sich um wirksam sein zu können, d.h. um auch eine gute Durchmischung zu erreichen, üblicherweise in Bodennähe des Tanks. Wenn diese Einbauten nicht in Benutzung sind, kann der reaktive Stoff in die Einbauten eindringen, und er wird dort wegen des geringen Stoffaustauschs allmählich polymerisieren, so dass die Gaseinspeisung im Bedarfsfall unbrauchbar wird. Daher wird oft ein geringer Luftstrom durch solche Leitungen geschickt, um diese Leitungen frei zu halten. Ein derartiger Luftstrom bedarf jedoch ebenfalls einer apparativen Überwachung, um das Zurücksteigen der in dem Tank gelagerten Flüssigkeit zu unterbinden und die Leitung offen zu halten. Solche Konstruktionen haben sich als kostenaufwändig erwiesen, um die ihnen zugedachte Aufgabe zuverlässig erfüllen zu können.

US 4,640,323 A bezieht sich auf ein tragbares System, um Flaschen mit Distickstoffoxid zu befüllen. Dieses Befüllungssystem erfordert einen Behälter, der mit einem Inertgasvorrat befüllt ist Der Behälter ist über eine Leitung mit einem fiaschenförmigen Behälter verbunden, der einen Distickstoffoxidvorrat enthält, der in kleine Flaschen umfüllbar ist. Durch den angeschlossenen Inertgasvorrat wird in einem Stickstoffoxidbehälter oberhalb des Flüssigkeitspegels ein Inertgaspolster aufrechterhalten, welches zum Druckaufbau dient. Durch den Druckaufbau über das Inertgaspolster kann über die in den Vorratsbehälter eintauchende Lanze des Leitungsrohres eine Druckbeaufschlagung des Gasvorrates erfolgen.

US 4,622,209 bezieht sich auf die Herabsetzung der Explosionsgefahr bei sich zersetzenden, unter hohem Druck stehenden industriellen Prozessgasen. Mit der aus US 4,622,209 bekannten Lösung werden den sich zersetzenden, zur Explosion neigenden Gasen Inertfluide, wie z. B. Wasser in dampfförmiger Form, zugesetzt, wobei dies in schwankenden Raten erfolgt. Ein stark schwankender Massenstrom des Inertfluides oder Inertgases ist stets höher bemessen als der Massenstrom sich zersetzender Gase.

Die EP-B 0 064 628 beschreibt eine Einrichtung zur Notstoppung von Polymerisationsreaktionen in einem geschlossenen Reaktionsbehälter durch Zugabe von Inhibitorlösung. Die Zugabe erfolgt im unteren Bereich des Behälters über einen mit einer Berstscheibe verschlossenen Anschlussflansch. An diesem Anschlussflansch ist eine abgewinkelte Steigleitung zu einem oberen Flansch angebracht, an welchem eine Druckgasleitung angeschlossen ist. Die Steigleitung ist mit einer Inhibitorlösung gefüllt, welche im Bedarfsfall durch ein Druckgas unter hohem Druck in den Behälter gedrückt wird. Das Druckgas kommt dabei aus einer Druckgasflasche, die über die Druckgasleitung mit der Steigleitung verbunden ist.

Durch die unmittelbare Nähe der Inhibitorlösung zu dem Behälter kann insbesondere im Gefahrenfalle die Inhibitorlösung selbst bereits vor der Einspeisung in den Behälter Schaden genommen haben, so dass sie ihre eigentliche Funktion nicht mehr erfüllen kann. Zudem besteht die Gefahr, dass bei der bekannten Berstscheibenanbringung die Berstscheibe vorzeitig brechen kann und daß das im Tank gelagerte Monomer unbrauchbar wird. Die dadurch hervorgerufene Verunreinigung der Lagervorrichtung erfordert anschließend langwierige Reinigungsmaßnahmen aufgrund der hohen Wirksamkeit des Inhibitors.

Weiterhin ist eine Kontrolle der Inhibitorlösung innerhalb der Steigleitung aufwendig, da hierzu die Steig-Leitung geleert und neu befüllt werden muß. Insbesondere wenn mehrere Behälter vorhanden sind, ist dies von großem Nachteil. Schließlich besteht auch die Gefahr einer Vereisung der Inhibitorlösung, wenn die Temperaturen zu stark absinken.

Die der Erfindung zugrundeliegende Aufgabe besteht also darin, ein Versorgungssystem für die Zuführung eines Fluids zu einem mit einer Zuleitung versehenen Behälter zu schaffen, das einen ebenso zuverlässigen wie einfachen Aufbau aufweist und geringe Investitionskosten erfordert.

Die Aufgabe wird gelöst durch ein Versorgungssystem für die Zuführung eines Fluids zu einem mit einer Zuleitung versehenen Behälter, aufweisend einen mit dem Fluid befüllten Vorratsraum und einen mit diesem Vorratsraum in Verbindung bringbaren Druckgasspeicher. Erfindungsgemäß sind der sind der Vorratsraum und der Druckgasspeicher in unmittelbarer Nähe zueinander angeordnet, und der Vorratsraum ist über Anschlußstücke bedarfsweise mit der Zuleitung in Verbindung bringbar.

Dieses Versorgungssystem kann zu jeder Zeit an dem Behälter angebracht bzw. entfernt werden. Hierdurch kann eine regelmäßige Funktionsprüfung in einfacher Weise erfolgen. Aufgrund des Aufbaus des Versorgungssystems kann dieses ohne Veränderung der Baumaße an Behälter mit sehr unterschiedlichem Inhalt eingesetzt werden.

Bei dem erfindungsgemäßen Versorgungssystem werden flüssige oder gasförmige Stoffe in das Gut eingetragen und die Stoffe gleichzeitig mit dem Gut vermischt. Das unter erhöhtem Druck stehende Fluid kann zum Zweck der Stabilisierung der in dem Behälter befindlichen Stoffe in den Behälter eingebracht werden und kann ein Gemisch aus einem Gas und einer Flüssigkeit sein.

Bevorzugte Ausgestaltungen sind im folgenden erläutert.

Zur Verlängerung der Dauer der Einspeisung des Fluids in den Behälter sind zwischen dem Druckgasspeicher und dem Vorratsraum für das Fluid Mittel zur Druckverringerung vorgesehen, mittels welcher der auf den Vorratsraum einwirkende Druck des Druckgases so verringerbar ist, daß eine gewünschte Strömungsgeschwindigkeit des Fluids nicht überschritten wird. Dabei ist es ebenfalls von Bedeutung, daß das nach dem Ausdrüken des Fluids aus dem Vorratsraum nachströmende Druckgas ebenfalls eine bestimmte Strömungsgeschwindigkeit nicht überschreitet, so daß der Austritt des Druckgases in dem mit Flüssigkeit befüllten Behälter zur Durchmischung des Behälterinhalts verwendet werden kann.

Vorteilhafterweise sind der Vorratsraum und der Druckgasspeicher als fahrbare Einheit ausgebildet. Hierdurch ist es möglich, daß das Versorgungssystem für mehrere Behälter verwendbar ist.

Da das in dem Vorratsraum gespeicherte Fluid zumindest teilweise in der Zuleitung zurückbleibt und nicht durch das Druckgas dem Behälter zugeführt wird, ist es zur Beibehaltung kompakter Versorgungssysteme von Vorteil, wenn die Länge der Zuleitung zu dem Behälter 500 m nicht übersteigt und aus Sicherheitsgründen mindestens 10 m beträgt.

Um bei einer Zuführung von Fluid innerhalb einer im Behälter befindlichen Flüssigkeit eine gute Durchmischung zu erhalten, ist es vorteilhaft, wenn der Druck innerhalb des Vorratsbehälters 10 bar, vorzugsweise 6 bar, nicht übersteigt. Bei einer Einspeisung von Fluid bzw. Druckgas innerhalb der in dem Behälter befindlichen Flüssigkeit erfolgt durch die Bildung von relativ großen Blasen eine gute Durchmischung. Wird ein zu hoher Druck gewählt, so bleiben die Blasen klein und der Mischeffekt der aufsteigenden Blasen gering.

Ein weiterer Vorteil eines relativ geringen Druckes in der Zuleitung besteht darin, daß das Versorgungssystem mittels des Anschlußstücks selbst bei geöffnetem Druckgasspeicher an die Zuleitung des Behälters anschließbar ist, ohne daß hierzu ein zu hoher Kraftaufwand erforderlich ist.

Durch ein Übersetzungsverhältnis des zur Kraftübertragung auf das Anschlußstück wirksamen Durchmessers gegenüber dem hydraulischen Durchmesser von mindestens 2 : 1 läßt sich der Kraftaufwand weiter verringern.

Ein erfindungsgemäßes Versorgungssystem ist in der Zeichnung dargestellt. Es zeigt die
- Fig. 1: eine schematische Darstellung des an einem Behälter angeschlossenen Versorgunssystems, die
- Fig. 2: ein per Hand verfahrbares Versorgunssystem in Seitenansicht, die
- Fig. 3: das Versorgungssystem aus Fig. 2 in Seitenansicht, um 9° versetzt und die
- Fig. 4: eine Draufsicht auf das in Fig. 2 dargestelle Versorgungssystem.

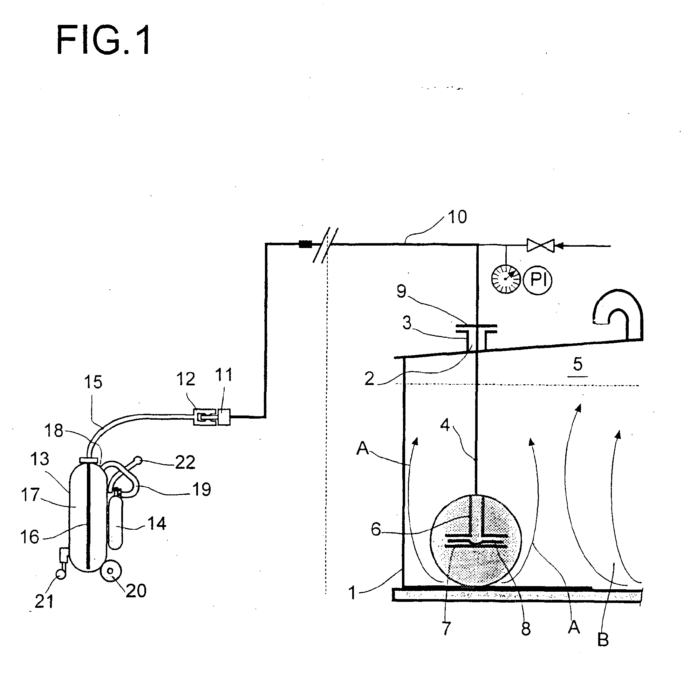

Die Fig. 1 zeigt eine schematische Darstellung eines mit einem Behälter 1 verbundenen erfindungsgemäßen Versorgungssystems. Der Behälter 1 weist eine Öffnung 2 mit einem vertikalen Anschlußflansch 3 auf. Durch die Öffnung 2 ragt ein Rohr 4 einer Vorrichtung zum Einbringen von Fluid in den Innenraum 5 des Behälters 1.

Das Rohr 4 ist an seinem im Innenraum 5 befindlichen, in der Fig. 1 vergrößert dargestellten Ende 6 mit einer Halterung 7 für eine Berstscheibe 8 versehen. Die Berstscheibe 8 ist zumindest im Betätigungsfall innerhalb der Behälterflüssigkeit und in Nähe des Behälterbodens angeordnet, so daß durch eine Einspeisung von Gas aufgrund der aufsteigenden Gasblasen eine aufwärtsgerichtete Strömung hervorgerufen wird, die durch die Pfeile A verdeutlicht wird. Diese Aufwärtsströmung im Bereich des Rohres 4 induziert auch in benachbarten Bereichen eine entsprechende Strömung, dargestellt durch die Pfeile B.

Das Rohr 4 ist an seinem anderen Ende mit einem Tragflansch 9 zur Befestigung an dem Flansch 3 des Behälters 1 versehen, wobei die Befestigung direkt oder unter Verwendung eines Zwischenflansches erfolgen kann. An dieses Rohr 4 ist eine Zuführungsleitung 10 für das in den Innenraum 5 einzubringenden Fluid angeschlossen.

Das erfindungsgemäße Versorgungssystem wird über eine an den Rohrleitungsflansch 9 angeschlossene Zuführungsleitung 10 mit dem einzubringenden Fluid beschickt. Eine bestimmte Menge dieses Fluids steht unter einem bestimmten Druck in dem Versorgungssystem bereit und wird erst im Gefahrenfall an die Zuführungsleitung 10 angeschlossen, wozu Kupplungsmittel 11, 12 vorgesehen sind. In der Regel ist das einzubringende Fluid eine Flüssigkeit, die sich in einem Vorratsraum 13 befindet. Dieser Vorratsraum 13 ist fest verbunden mit einem Druckgasspeicher in Form einer Treibgasflasche 14. Durch das Öffnen der Treibgasflasche 14 wird erst die Flüssigkeit aus dem Vorratsraum 13 ausgetrieben und durch das Rohr 4 in den Tankinhalt eingebracht. Das nachströmende überschüssige Gas bewirkt durch die vertikalen Strömungen, die durch aufsteigende Gasblasen erzeugt werden, eine intensive Durchmischung der Tankflüssigkeit mit dem injizierten Fluid Es ist dabei ausreichend, wenn der Druckbehälter unmittelbar vor dem Öffnen der Gasflasche mit einer Schnellkupplung 11, 12 an das Zuführungsrohr 10 angeschlossen wird.

Die Schnellkupplung 11, 12 ist über einen flexiblen Schlauch 15 mit dem Vorratsraum 13 verbunden. Innerhalb des Vorratsraums 13 befindet sich ein Entnahmerohr 16, welches sich mit seinem einen Ende fast bis zu dem Boden des Vorratsraumes 13 erstreckt, wobei das andere Ende an den Schlauch 15 angeschlossen ist. Der Vorratsraum 13 ist mit einer Inhibitorlösung 17 befüllt, weist jedoch in seinem oberen Bereich einen Anschluß 18 für eine mit dem Druckgasspeicher 14 verbundene Druckgaszuführung 19 auf.

Der Vorratsraum 13 ist mit Rollen 20, 21 und einem Griff 22 versehen, so daß das Versorgungssystem von Hand verfahren werden kann.

Wird das Versorgungssystem betätigt, baut sich in dem Rohr 4 ein Druck auf. Wenn der zur Zerstörung der Berstscheibe 8 erforderliche Druck erreicht ist, entspannt sich das Fluid durch das Rohr 4 in den Behälterinnenraum 5. Handelt es sich bei dem weiter nachströmenden Fluid um ein Gemisch aus Flüssigkeit und Gas, so vermischt das weiter nachströmende Gas die eingepreßte Flüssigkeit mit dem Inhalt des Behälters.

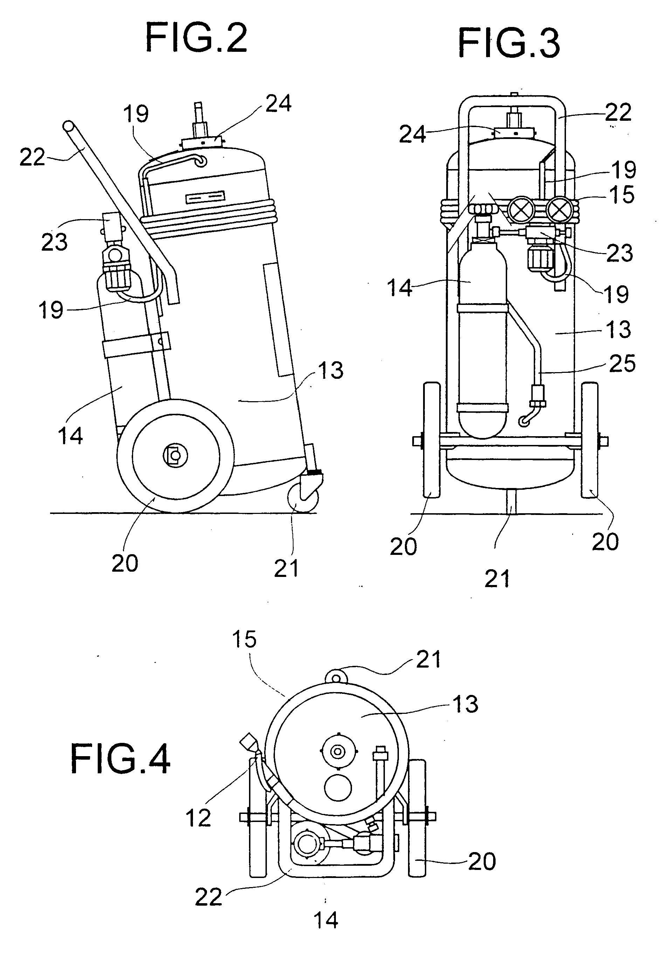

In Fig. 2 ist das Versorgungssystem in einer Seitenansicht dargestellt. Zu erkennen sind die Räder 20, 21, wobei die Rader 20 im wesentlichen das Gewicht des Versorgungssystems tragen und das Rad 21 als Lenkrolle ausgeführt ist. Zur besseren Handhabung ist ein Griff 22 an dem Vorratsraum 13 angebracht.

Ebenfalls an den Vorratsraum 13 angebracht ist der Druckgasspeicher 14, der über eine Verbindungsleitung 19 mit dem oberen Ende des Vorratsraums 13 in Verbindung steht. Dazwischengeschaltet ist ein Druckminderventil 22, mittels welchem das unter hohem Druck den Druckgasspeicher 14 verlassende Gas auf einen konstanten Druck von etwa 6 bar entspannt wird. Der Vorratsraum 13 weist eine Einfüllöffnung auf, deren Verschluß 24 mit einem Sicherheitsüberdruckventil versehen ist.

Bezüglich Fig. 3 ist anzumerken, daß das Versorgungssystem ohne die in Fig. 2 gezeigte Schrägstellung, die etwa 9° beträgt, in aufgerichteter Stellung dargestellt ist. In Fig. 4 wird die Draufsicht auf das aufgerichtete Versorgungssystem gezeigt. Zu erkennen ist der Vorratsraum 13, der daran befestigte Druckgasspeicher 14, die Räder 20, 21 und der Bügel 22. Um den Vorratsraum 13 ist der Schlauch 15 gewickelt, dessen Ende mit einem Anschlußstück 12 versehen ist. Dieses Anschlußstück 12 ist so ausgeführt, daß die zur Herstellung des Anschlußes erforderliche Krafteinleitung über einen Durchmesser D ausgeübt werden kann, welcher gegenüber dem hydraulischen Durchmesser d mindestens doppelt so groß ist. In dem angegebenen Druckbereich von etwa 6 bar ist es damit möglich, selbst bei bereits geöffnetem Druckgasspeicher und damit einhergehender Druckbeaufschlagung des Vorratsraums 13 den Anschluß des Schlauches 15 an die Leitung 10 manuell zu bewerkstelligen.

Die Entnahme erfolgt hier über eine außenliegende Leitung 25, welche die Inhibitorlösung am Boden des Vorratsbehälters aufnimmt. Die Leitung 25 ist mit dem Schlauch 15 verbunden.

Da Großbehälter mit zunehmendem Volumen eine Bauweise mit quadratischem Querschnitt bevorzugen, betrifft der bevorzugte Verwendungsbereich der Erfindung Behälter mit einem Volumen von 20 bis 1000 m³, entsprechend einer vertikalen Rohrlänge von 3 bis 11 Meter. Insgesamt wird in Verbindung mit geeigneten Behältern zur Aufnahme der Stabilisatorflüssigkeit und geeigneten Schnellkupplungen ein kostengünstiges, zuverlässig arbeitendes und wartungsarmes Versorgungssystem bereitgestellt, insbesondere für die Lagerung reaktiver Stoffe.

Im besonderem Maße eignet sich das Versorgungssystem zur Durchführung eines Verfahrens zur Sofortbeendigung von radikalischen Polymerisationen durch Zusatz einer Phenothiazin (PTZ) enthaltenden Inhibitorlösung zum radikalisch polymerisierenden System, wobei das Lösungsmittel der Inhibitorlösung zu wenigstens 45 % seines Gewichtes aus einem N-Alkylpyrrolidon besteht. Das N-Alkylpyrrolidon kann dabei N-Methylpyrrolidon und/oder N-Ethylpyrrolidon sein.

Weiterhin ist es vorteilhaft, wenn der Phenothiazingehalt der Inhibitorlösung, bezogen auf das Gewicht der Inhibitorlösung, wenigstens 10 Gew.-%, bevorzugt etwa 45 - 55 Gew.-%, beträgt. Die Vorrichtung ist insbesondere dann vorteilhaft einsetzbar, wenn es sich bei dem radikalisch polymerisierenden System um in Substanz radikalisch polymerisierende (Meth)acrylmonomere handelt, wobei das (Meth)acrylmonomer eine (Meth)acrylsäure und insbesondere ein (Meth)acrylsäureester sein kann.

Die erforderliche Menge Phenothiazin zur Sofortbeendigung von radikalischen Polymerisationen hängt von der Menge der an der Reaktion beteiligten Radikale ab. Im Versuch hat sich gezeigt, daß in den meisten Fällen Konzentrationen zwischen 200 und 300 ppm Phenothiazin ausreichend sind, um die Polymerisation derart einzugrenzen, daß sie keine Bedrohung darstellt.

Für eine 50%ige Lösung von Phenothiazin in N-Alkylpyrrolion ergibt sich bis zu Temperaturen von -10°C eine ausreichende Fließfähigkeit für den praktischen Einsatz. Weiterhin wurde festgestellt, daß ein Gefrieren selbst bei Temperaturen von bis zu -20°C nicht auftritt. Gleichwohl sollte die Lagerung der Lösung, und damit des Versorgungssystems, in einem beheiztem Lager erfolgen. Dabei müssen keine besonderen Maßnahmen in bezug auf Explosionsgefahr oder Feuergefahr getroffen werden.

Die 50%-Lösung Phenothiazin/N-Alkylpyrrolidon (w/w) hat eine Lagerfähigkeit von etwa fünf Jahren bei üblichen Lagerbedingungen. Tests bei 60°C während einer sechsmonatigen Dauer unter Ausschluß von. Sauerstoff haben nur geringfügige Änderungen bewirkt.

Dadurch, daß Konzentrationen von 250 ppm Phenothiazin zur Sofortbeendigung von radikalischen Polymerisationen ausreichen, können alle möglichen Behältergrößen mit wenigen Versorgungssystemen geschützt werden.

In der nachfolgenden Tabelle 1 sind die erforderlichen Mengen bezogen auf das jeweilige Behältervolumen und ein Höhen-/Durchmesserverhältnis (H/D) dargestellt, wobei auch das Volumen des Mischgases bzw. die Mischzeit angegeben ist.

**Tabelle 1:**

| Tankinhalt [m³] | 20 | | | 100 | | | 1000 | | |
|---|---|---|---|---|---|---|---|---|---|
| Verhältnis [H/D] | 1 | 1,5 | 2 | 1 | 1,5 | 2 | 1 | 1,5 | 2 |
| Menge PTZ in [kg] 250ppm | 5 | 5 | 5 | 25 | 25 | 25 | 250 | 250 | 250 |
| | | | | | | | | | |
| Vorratsraum in [Liter] | 10 | 10 | 10 | 50 | 50 | 50 | 500 | 500 | 500 |
| | | | | | | | | | |
| Gasflasche in [Liter] 200 bar | [2] | [2] | [2] | 6 | 6 | 6 | 60 | 60 | 60 |
| | | | | | | | | | |
| Volumen des Mischgases in [m³] 1 bar | 0,2 | 0,2 | 0,2 | 1,2 | 0,8 | 0,6 | 12 | 8 | 6 |
| | | | | | | | | | |
| Mischzeit in [min] | 7,0 | 5,5 | 5,0 | 8,5 | 7,5 | 7,0 | 16 | 15 | 14 |

Die Zufuhrzeit einer 50% PTZ-Lösung über eine 100 m lange horizontale Leitung mit einer 10 m langen Steigleitung bei einem Zufuhrdruck von 6 bar ist in der Tabelle 2 aufgezeigt. Die Dauer der Zuführung ist geringer als die gesamte Einspeisungsdauer.

In Tabelle 2 wird die Zuführungszeit von Fluid in den Behälter für eine Menge von 50 1 für einen Behälter mit 100 m³ und 500 1 für einen Behälter mit 1000 m³ aufgeführt. Dabei wurden die Rohrleitungsverluste für eine 100 m lange horizontale Zuleitung und eine 10 m lange vertikale Zuleitung berücksichtigt. Die Zuführungszeiten hängen neben der Länge bzw. dem Durchmesser der Rohrleitungen auch von den dosierten Mengen ab. Dabei ist davon auszugehen, daß aufgrund der tatsächlichen Gegebenheiten eine höhere Dosiermenge trotz erhöhter Rohrleitungsquerschnitte zu einer längeren Zuführungszeit führt.

**Tabelle 2:**

| **Zuleitung** | | **Dauer der Zuführung [Minuten]** | | | | |
|---|---|---|---|---|---|---|
| Durchmesser [mm] | | **100** | | **1000** | | Tankinhalt [m³] |
| horizontal: vertikal: | | -10 | +10 | -10 | +10 | Temp. [°C] |
| 30 | 15 | 1,5 | 0,9 | 14,6 | 9,3 | |
| 40 | 20 | 0,5 | 0,5 | 4,7 | 4,5 | |
| 50 | 25 | 0,25 | 0,25 | 2,5 | 2,6 | |
| 60 | 30 | 0,16 | 0,16 | 1,6 | 1,6 | |

Durch die hohe Konzentration der Lösung ist es möglich, kleine Versorgungssysteme zu verwenden. Zur Aufbewahrung der Phenothiazin-Lösung werden vorteilhafterweise Vorratsräume aus Edelstahl eingesetzt, wobei die Lösung gewöhnlichen Stahl zwar nicht angreift, aber durch Rost beeinflußt werden kann. Die verwendeten Versorgungssysteme sind dank ihres geringen Gewichts fahrbar. Sie können daher an geschützten Orten gelagert und im Notfall an Ort und Stelle verfahren werden. Dies hat einen gunstigen Einfluß auf die Unterhaltskosten. Für Läger mit mehr als einem Behälter reicht ein einziges oder eine kleine Anzahl von Versorgungssystemen aus, wodurch die Investitionskosten im Gegensatz zu den herkömmlich verwendeten einzelnen Anbindungen der jeweiligen Behälter an jeweils ein Versorgungssystem oder an ein zentrales Versorgungssystem gering gehalten sind.

Wesentlich für die Sofortbeendigung der Polymerisationen ist eine gute Durchmischung des Behälterinhalts. Hierzu ist es vorteilhaft, wenn das Gas unter vergleichsweise geringem Massendurchsatz zugeführt wird, um große Gasblasen zu bilden. Während des Aufstiegs dieser Gasblasen zur Oberfläche wird eine stationäre Konvektionsströmung des Behälterinhalts erzeugt. Eine Beschränkung des Drucks des zugeführten Gases von 10 bar, vorzugsweise 6 bar, trägt dem Rechnung. Die Druckverringerung kann dabei entweder über spezielle Druckminderventile innerhalb einer gewissen Bandbreite eingestellt werden oder über fest eingebaute Drosselscheiben bewirkt werden.

Ein Vorteil des Systems besteht darin, daß die Einspeisung des Fluids von einem sicheren Ort aus und in großem Abstand zum Behälter erfolgen kann, der vorteilhafterweise 10 bis 500 m beträgt. Der Durchmesser der Zuführleitung hängt von der Größe des Behälters ab und beträgt für Behälter bis 100 m³ zwischen 25 und 40 mm, für 100 bis 1000 m³ mindestens 50 mm. Dabei ist zu berücksichtigen, daß überdimensionierte Zuführleitungen wegen des nur unvollständigen Transports des Fluids innerhalb der Rohrleitung zu einem Verlust von Fluid und von zur Durchmischung zur Verfügung stehendem Gas bedeutet.

Zwar drückt das aus dem Druckgasspeicher ausströmende Druckgas zunächst ausschließlich das im Vorratsraum befindliche Fluid in die Rohrleitung hinein, wodurch das in der Rohrleitung befindliche Gas bereits komprimiert und gegebenenfalls zum Ausströmen in den Behälter 1 gebracht wird. Sobald das Fluid vollständig aus dem Vorratsraum 13 in die Zuleitung 10 transportiert wurde, besteht aber die Gefahr, daß das Druckgas das Fluid nicht wie einen Pfropf vor sich herschiebt, sondern zwischen der Innenwand der Zuleitung 10 und dem Fluid vorbeistreicht, ohne das Fluid weiter zu transportieren. Dies ist erst dann möglich, wenn das in dem Vorratsraum 13 befindliche Fluid soweit ausgetreten ist, daß das Druckgas in das Entnahmerohr 16 einströmen kann.

## Patentansprüche

1. Versorgungssystem für die Zuführung eines Fluids zu einem Behälter (1) mit einer mit dem Behälter (1) verbundenen Zuleitung (10), wobei zwischen dem Druckgasspeicher (14) und dem Vorratsraum (13) für das Fluid Mittel (22) zur Druckverringerung vorgesehen sind, einem mit dem Fluid befüllten Vorratsraum (13), wobei der Vorratsraum (13) über Anschlussstücke (11), (12) mit der Zuleitung (10) verbunden ist, einem mit dem Vorratsraum (13) in Verbindung stehenden Druckgasspeicher (14), wobei der Vorratsraum (13) und der Druckgasspeicher (14) in unmittelbarer Nähe zueinander angeordnet sind, und einem mit der Zuleitung (10) verbundenen Rohr (4), **dadurch gekennzeichnet, dass** das Rohr (4) in den Behälter (1) hineinragt, wobei das Rohr (4) an seinem im Innenraum (5) befindlichen Ende (6) mit einer Halterung (7) für eine Berstscheibe (8) versehen ist.

2. Versorgungssystem nach Anspruch 1 **dadurch gekennzeichnet, dass** der Vorratsraum (13) und der Druckgasspeicher (14) als fahrbare Einheit ausgebildet sind.

3. Versorgungssystem nach Anspruch 1, **dadurch gekennzeichnet, dass** der Druck innerhalb des Vorratsbehälters 10 bar, vorzugsweise 6 bar, nicht übersteigt.

4. Versorgungssystem nach Anspruch 1 **dadurch gekennzeichnet, dass** die Anschlussstücke (11), (12) selbst bei geöffnetem Druckgasspeicher (14) an die Zuleitung (10) des Behälters (1) anschließbar sind.

5. Versorgungssystem nach Anspruch 4, **dadurch gekennzeichnet, dass** das Verhältnis des zur Kraftübertragung auf das Anschlussstück (11), (12) wirksamen Durchmessers D gegenüber dem hydraulischen Durchmesser d mindestens 2:1 beträgt.

6. Versorgungssystem gemäß einem der vorhergehenden Ansprüche, **dadurch gekennzeichnet, dass** das Fluid eine Inhibitorlösung (17) aufweist.

## Claims

1. A supply system for transferring a fluid into a container (1) with a feed line (10) connected to the container (1), wherein means (22) for reducing the pressure are provided between the pressurized gas storage device (14) and the reservoir (13) for the fluid; a reservoir (13) filled with the fluid, wherein the reservoir (13) is connected to the feed line (10) via connector pieces (11), (12); a pressurized gas storage device (14) connected to the reservoir (13), wherein the reservoir (13) and the pressurized gas storage device (14) are arranged in the direct vicinity of one another; and with a pipe (4) connected to the feed line (10), wherein the pipe (4) projects into the container (1), wherein the pipe (4), at its end (6) situated in the interior (5), is provided with a fixture (7) for a rupture disk (8).

2. The supply system according to claim 1, wherein the reservoir (13) and the pressurized gas storage device (14) are embodied as a mobile unit.

3. The supply system according to claim 1, wherein the pressure within the reservoir does not exceed 10 bar, preferably 6 bar.

4. The supply system according to claim 1, wherein the connector pieces (11), (12) can be connected to the feed line (10) of the container (1), even if the pressurized gas storage device (14) is open.

5. The supply system according to claim 4, wherein the ratio of the diameter D, which is effective for transmitting power to the connector piece (11), (12), to the hydraulic diameter d is at least 2:1.

6. The supply system according to one of the preceding claims, wherein the fluid has an inhibitor solution (17).

## Revendications

1. Système d'alimentation pour l'introduction d'un fluide dans un récipient (1) comprenant une conduite d'alimentation (10) connectée au récipient (1), des moyens (22) pour réduire la pression étant prévus entre l'accumulateur de gaz sous pression (14) et l'espace de réserve (13) pour le fluide, un espace de réserve (13) rempli de fluide, l'espace de réserve (13) étant connecté à la conduite d'alimentation (10) par le biais de raccords (11), (12), un accumulateur de gaz sous pression (14) en liaison avec l'espace de réserve (13), l'espace de réserve (13) et l'accumulateur de gaz sous pression (14) étant disposés à proximité immédiate l'un de l'autre, et un tube (4) connecté à la conduite d'alimentation (10), **caractérisé en ce que** le tube (4) pénètre dans le récipient (1), le tube (4) étant muni à son extrémité (6) située dans l'espace interne (5) d'une fixation (7) pour un disque d'éclatement (8).

2. Système d'alimentation selon la revendication 1, **caractérisé en ce que** l'espace de réserve (13) et l'accumulateur de gaz sous pression (14) sont réalisés sous forme d'unité déplaçable.

3. Système d'alimentation selon la revendication 1, **caractérisé en ce que** la pression à l'intérieur du récipient de réserve ne dépasse pas 10 bars, de préférence 6 bars.

4. Système d'alimentation selon la revendication 1, **caractérisé en ce que** les raccords (11), (12) peuvent être raccordés eux-mêmes à la conduite d'alimentation (10) du récipient (1) lorsque l'accumulateur de gaz sous pression (14) est ouvert.

5. Système d'alimentation selon la revendication 4, **caractérisé en ce que** le rapport du diamètre D actif pour le transfert de force au raccord (11), (12) au diamètre hydraulique d vaut au moins 2:1.

6. Système d'alimentation selon l'une quelconque des revendications précédentes, **caractérisé en ce que** le fluide présente une solution inhibitrice (17).
